# EUROPEAN PATENT APPLICATION

(11) **EP 2 312 873 A2**
(43) Date of publication of application: **20.04.2011**
(21) Application number: 10186456.9
(22) Date of filing: 04.10.2010
(51) Int. Cl.: H04W 8/20

(54) **Mobile device and operation method thereof**

(30) Priority: 13.10.2009 KR 20090097202
(71) Applicant: SAMSUNG ELECTRONICS CO., LTD., Suwon-si, Gyeonggi-do (KR)
(72) Inventor: Shin, Sang Min, Gyeonggi-do (KR)
(74) Representative: Jenkins, Richard Gavin

(57) **Abstract**

A mobile device and an operation method thereof are provided. The method includes removing a Subscriber Identity Module (SIM) card, previously inserted into the mobile device, from the mobile device, determining whether a SIM card, identical to or different from the removed SIM card, is inserted into the mobile device, and, managing base station-related information, wherein the managing of the base station-related information comprises at least one of updating the base station-related information with base station-related information newly acquired by performing a base station-related protocol procedure based on a newly inserted SIM card, according to at least one of the type and the insertion time point of the newly inserted SIM card, and maintaining base station-related information stored based on the removed SIM card.

## Description

### BACKGROUND OF THE INVENTION

### 1. Field of the Invention:

The present invention relates to mobile systems. More particularly, the present invention relates to a method that can update information about a mobile device that is operated based on a Subscriber Identity Module (SIM) card, thereby preventing the mobile device from performing unnecessary operations.

### 2. Description of the Related Art:

With the rapid development of technology in the area of mobile communication systems, mobile devices are now provided with a variety of advanced functions, such as video calling, an electronic organizer, an Internet function, etc., as well as voice calling, and a Short Message Service (SMS).

In recent years, mobile devices have been equipped with a Subscriber Identity Module (SIM) card for storing user information. A SIM card can be inserted into a mobile device and used to identify a user. That is, SIM cards serve to store user information. If a SIM card is removed from a mobile device and then re-inserted thereto, the mobile device must be rebooted to detect the SIM card and perform a corresponding function based on the SIM. This, however, causes various problems. For example, if a user has a plurality of SIM cards, the user may frequently replace the SIM card in their mobile device. In that case, the user must reboot the mobile device each time that the SIM card is replaced. This causes an inconvenience to the mobile device user and also a waste of battery power.

### SUMMARY OF THE INVENTION

An aspect of the present invention is to address at least the above mentioned problems, and/or disadvantages and to provide at least the advantages described below. Accordingly, an aspect of the present invention is to provide a method that can update only corresponding information about a mobile device equipped with a Subscriber Identity Module (SIM) card when the SIM card is replaced in the mobile device, thereby allowing a user to easily and rapidly use the mobile device and preventing the battery power from being wasted.

In accordance with an aspect of the present invention, a mobile device adapted to the operation method is provided.

In accordance with an aspect of the present invention, an operation method of a mobile device is provided. The method includes removing a SIM card, previously inserted into the mobile device, from the mobile device, determining whether a SIM card, identical to or different from the removed SIM card, is inserted into the mobile device, and managing base station-related information. Managing base station-related information includes: updating the base station-related information with base station-related information newly acquired by performing a base station-related protocol procedure based on a newly inserted SIM card, according to at least one of the type and the insertion time point of the newly inserted SIM card, or maintaining base station-related information stored based on the removed SIM card.

In accordance with another aspect of the present invention, a mobile device including: a SIM card interface for receiving at least one of many SIM cards, and a controller for updating base station-related information with base station-related information newly acquired by performing a base station-related protocol procedure based on a SIM card, newly inserted into the SIM card interface, according to the type and the insertion time point of the newly inserted SIM card or for maintaining base station-related information stored based on a removed SIM card before insertion of the SIM card.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a view illustrating a mobile device according to an exemplary embodiment of the present invention;

FIG. 2 is a schematic block diagram illustrating a mobile device according to an exemplary embodiment of the present invention;

FIG. 3 illustrates a controller of a mobile device according to an exemplary embodiment of the present invention; and

FIG. 4 is a flowchart of a mobile device operation according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the following description, a detailed description of known functions and configurations incorporated herein will be omitted when it may make the subject matter of the present invention less clear. In the drawings, the same or similar elements are denoted by the same reference numerals even though they are depicted in different drawings. A detailed description of configurations that is comprised of the same elements and performs the same functions will not be explained repeatedly in the description.

Although the drawings represent exemplary embodiments of the invention, the drawings are not necessarily to scale and certain features may be exaggerated or omitted in order to better illustrate and explain the present invention. It should be understood that the present invention is not limited to the drawing scale.

In the following description, although exemplary embodiments of the present invention are explained based on a mobile device that can be equipped with at least one Subscriber Identity Module (SIM) cards and provide call services, it will be appreciated that the present invention is not so limited. For example, the mobile device can be applied to all information communication devices, multimedia devices, and their applications, such as, a mobile communication terminal, a mobile phone, a wired/wireless phone, a Personal Digital Assistant (PDA), a smart phone, etc.

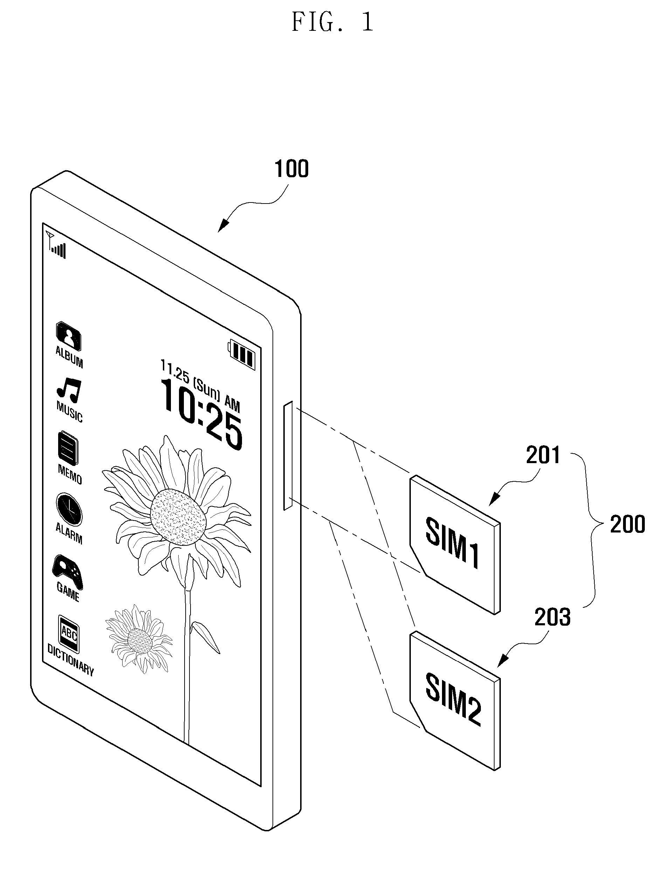

FIG. 1 is a view illustrating a mobile device according to an exemplary embodiment of the present invention.

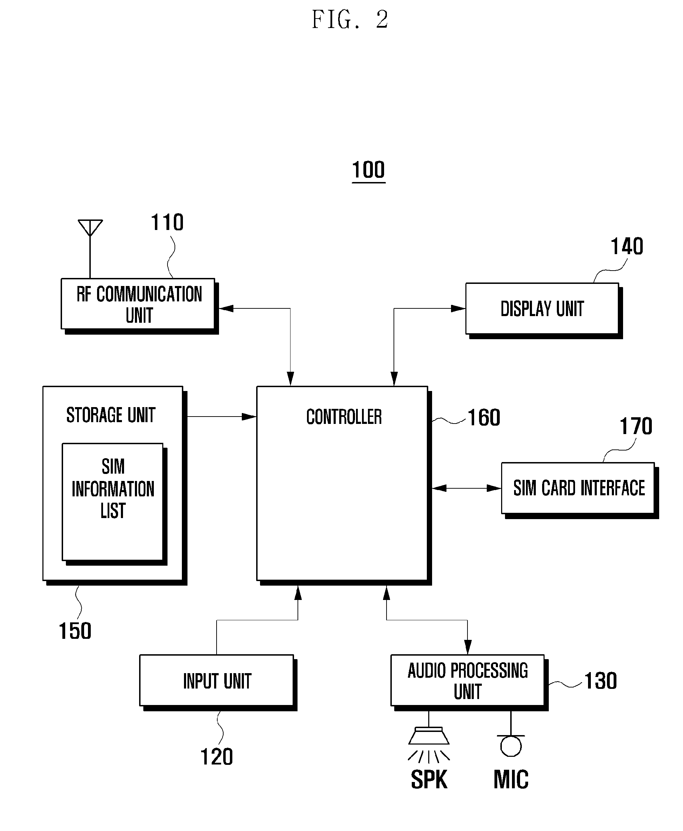

FIG. 2 is a schematic block diagram illustrating a mobile device according to an exemplary embodiment of the present invention.

In the following description, for the sake of convenience, a SIM card 200 refers to one of the two SIM cards 201 and 203. The SIM card 200 may be used as a concept to include two or more SIM cards. Accordingly, the mobile device 100 can allow for the replacement of two or more SIM cards. More particularly, SIM 1 card 201 refers to a SIM card that the user first selected from a plurality of SIM cards before the mobile device 100 is booted. Likewise, SIM 2 card 203 refers to a SIM card that the user has secondly selected from the SIM cards that differ from the type of the SIM 1 card 201 inserted into the mobile device 100.

Referring to FIGs. 1 and 2, the mobile device 100 includes a Radio Frequency (RF) communication unit 110, an input unit 120, an audio processing unit 130, a display unit 140, a storage unit 150, a SIM card interface 170, and a controller 160.

The mobile device 100 is equipped with a SIM card 200 via the SIM care interface 170. During the installation, the mobile device 100 can update only corresponding information about the SIM card 200 according to the type of the SIM card 200. That is, it is assumed that the mobile device 100 is booted after inserting a SIM 1 card 201 thereto and then the SIM 1 card 201 is removed therefrom. In that case, if the SIM card 200 is inserted into the mobile device 100, the mobile device 100 can update only corresponding information about the inserted SIM card 200 based on the type of the inserted SIM card 200 and the time point that the SIM card 200 is inserted thereto. In that case, the mobile device 100 can perform corresponding processes, based on the inserted SIM card 200, without performing a rebooting process. Therefore, the mobile device 100 can allow the user to easily and rapidly use its functions. In the following description, the operations and the elements of the mobile device 100 are explained in more detail with reference to the accompanying drawings.

The RF communication unit 110 establishes a communication channel with a base station that provides mobile communication services, under the control of the controller 160. The RF communication unit 110 transmits and receives signals to and from the base station via the established communication channel. To this end, the RF communication unit 110 includes an RF transmitter for up-converting the frequency of signals to be transmitted and amplifying the signals and an RF receiver for low-noise amplifying received RF signals and down-converting the frequency of the received RF signals. In an exemplary embodiment of the present invention, the RF communication unit 110 establishes a communication channel based on a SIM card 200 inserted into the mobile device 100. That is, the RF communication unit 110 establishes a communication channel with a base station provided by a service provider that supports the inserted SIM card 200. The RF communication unit 110 receives Public Land Mobile Network (PLMN) selection information, cell selection information, etc. from the base station via the communication channel. The RF communication unit 110 also receives information created when the base station registers a location of the mobile device 100 and stores it in the storage unit 150 under the control of the controller 160. The PLMN selection information includes information indicating a service provider. The cell selection information includes information about a base station forming cells and information about other base stations adjacent to the base station. If the SIM card 200 is removed from the mobile device 100 and then re-inserted thereto, the RF communication unit 110 receives corresponding PLMN selection information and cell selection information from a base station that supports the inserted SIM card 200.

The input unit 120 includes input keys and function keys that allow a user to input numbers or letter information and to set a variety of functions. The function keys include direction keys, side keys, shortcut keys, etc., which are set to perform specific functions. In addition, the input unit 120 creates key signals for setting user's options and for controlling functions of the mobile device 100 and transmits them to the controller 160. More particularly, the input unit 120 can create an input signal for requesting a booting process in the mobile device 100 after the SIM card 200 is first inserted into the mobile device 100, an input signal for executing a call function in an insertion state of the SIM card 200, an input signal for accessing a web server based on the SIM card 200, etc. The input unit 120 transmits the created input signals to the controller 160.

The audio processing unit 130 includes a speaker (SPK) for reproducing audio data transmitted and received via the communication channel, established based on the SIM card 200, and a microphone (MIC) for receiving a user's voice or audio signals during the call. In an exemplary embodiment of the present invention, the audio processing unit 130 can output an alert sound or a corresponding audio sound according to an event in which the SIM card 200 is removed or inserted after the mobile device has been booted up. Such an alert sound or a corresponding audio sound may not be output according to a user's setting.

The display unit 140 displays screens corresponding to operations of the mobile device 100. Examples of the screens include a preset idle screen after the mobile device has been booted up, a menu screen for selecting a variety of menus for the mobile device 100, a screen for selecting sub-menus in each menu, screens for selecting a particular menu and activating a function according to the selected menu, etc. More particularly, although the SIM card 200 is removed from the mobile device 100 in a state in which the mobile device has been booted up and then an idle screen is displayed, the display unit 140 can maintain displaying the idle screen for a certain period of time or until power is cut off. The display unit 140 can also display an icon or image on one side of the screen so that the user can detect the type of SIM card inserted into the SIM card interface 170. If a SIM card 200 is not inserted into the SIM card interface 170, the display unit 140 can display a message, stating that a SIM card 200 has not been inserted, on one side of the screen. The display unit 140 can also display a variety of messages on the screen, for example, a message stating the removal of an inserted SIM card 200, for example SIM 1 card 201, a message stating the re-insertion of the SIM 1 card 201 having been removed from the SIM card interface 170, a message stating that a SIM 2 card 203 is inserted into the SIM card interface 170, a message stating that, if information is updated according to the insertion of the SIM card 200, the updating process has been completed, etc. The display unit 140 can be implemented with a Liquid Crystal Display (LCD), an Organic Light Emitting Diode (OLED), or the like. In that case, the display unit 140 includes an LCD controlling unit, a memory for storing data, and an LCD panel. More particularly, if the LCD is implemented with a touch screen comprised of a display panel and a touch panel arranged on the display panel, the display unit 140 can also serve as an input device.

The storage unit 150 stores a variety of application programs. For example, the storage unit 150 may store an application program for operating the functions according to the exemplary embodiments of the present invention, an application program for providing a call service, an application program for operating a SIM card 200 inserted into the SIM card interface 170, etc. The storage unit 150 can also store user data and data created when the application programs are executed. The storage unit 150 is comprised of a program storage area and a data storage area.

The program storage area stores an Operating System (OS) for booting up the mobile device 100, application programs for setting options of the mobile device 100, etc. Examples of options include audio sound playback, image or moving image back, etc. More particularly, the program storage area stores a SIM card simple operating program. The OS performs a mobile communication service routine that is designed to detect whether a SIM card 200 is inserted into the SIM card interface 170 during the bootstrapping process and provide a mobile communication service based on the inserted SIM card 200.

The mobile communication service routine registers the location of the mobile device 100 to a searched base station, based on the inserted SIM card 200. It can also store PLMN selection information and cell selection information, received by the mobile device 100 from the base station, in a virtual SIM storage area allocated to the data storage area. It can also store phone book information stored in the SIM card 200 to the virtual SIM storage area. After that, if a mobile communication service is activated based on the inserted SIM card 200, the OS can perform a control operation so that call log information or text transmission/reception information, acquired by activating a corresponding function, can be stored in the virtual SIM storage area.

The SIM card simple operating program includes a routine for determining the type of a SIM card 200 that is removed or inserted from or to the SIM card interface 170 after the mobile device has been booted up, a routine for operating a timer when the SIM card 200 is removed, a routine for updating information according to the type of a SIM card 200 inserted into the SIM card interface 170 in a time period of the timer, a routine for updating information about a SIM card 200 inserted into the SIM card interface 170 after a time period of the timer has elapsed, and a routine for displaying a message stating that no SIM card is inserted in the SIM card interface 170 when an input signal is received that can execute a 'No SIM card mode,' in a state where a SIM card has not been inserted into the SIM card interface 170 after a time period of the timer has elapsed and can allow a user to use a mobile communication service. If a previously inserted SIM card is removed and then a new SIM card is inserted after the mobile device has been booted up, the information updating routine performs a protocol procedure for supporting a mobile communication service and updates information created according to the execution of the protocol procedure, based on the type of the newly inserted SIM card and the time point that the new SIM card is inserted. The protocol procedure includes a process of accessing a base station provided by a service subscriber based on information provided by the SIM card 200, a process of receiving PLMN selection information related to a service provider from a base station and cell selection information about the relationship between the accessed base station and other base stations near the accessed base station, and a process of registering the location of the mobile device 100 to a corresponding base station. The information updating routine updates information stored in the data storage area with information transmitted from the base station during the process of performing the protocol procedure. For example, if SIM 1 card 201 is removed from the SIM card interface 170 and then SIM 2 card 203 is inserted thereto or if SIM 1 card 201 is inserted into the SIM card interface 170 after a time period of the timer has elapsed, the information updating routine performs the protocol procedure and stores the received cell selection information and PLMN selection information in the data storage area. In addition, the information updating routine can update phone book information provided by a previously inserted SIM card 200, and call log information and text transmission/receive information, created when the SIM card 200 is operated.

The data storage area stores data created when the mobile device 100 is operated, for example, data recorded during the call and user data related to a variety of options provided by the mobile device 100. Examples of user data include moving image data, phone book data, audio data, contents and information about user data. More particularly, the data storage area can generate a virtual SIM storage area when a SIM card 200 is inserted into the SIM card interface 170. The virtual SIM storage area can store information, stored in the SIM card 200 to operate information about the SIM card 200 and information generated when the SIM card 200 is operated. That is, the data storage area can generate a virtual SIM storage area and can store phone book information provided by the inserted SIM card 200 therein. The data storage area can also store information created when the protocol procedure is performed based on the SIM card 200, for example, cell selection information and PLMN selection information. The data storage area can also store call log information or text transmission/reception information, created when a mobile communication service, operated based on the SIM card 200, is used. The stored information about the SIM card 200 can be used when a mobile communication service is supported based on the SIM card 200. The data storage area can store International Mobile Subscriber Identity (IMSI) values of the SIM cards 200 having been inserted into the SIM card interface 170, in a list, and can manage them. That is, the data storage area can store information about SIM cards that were or have been inserted into the SIM card interface 170 in a list, i.e., a SIM information list. In the data storage area, the number of IMSI values, stored in a SIM information list, can be set by a mobile device manufacturer or user. The SIM information list can be used to identify a type of a SIM card 200 that is newly inserted into the SIM card interface 170. For example, if SIM 1 card 201 is inserted into the SIM card interface 170, it is assumed that the data storage area stores first IMSI information. After that, if the SIM 1 card 201 is removed and then SIM 1 card 201 or SIM 2 card 203 is inserted into the SIM card interface 170, the IMSI value, transmitted from the newly inserted SIM card 200, is compared with a stored IMSI value in order to determine whether the newly inserted SIM card 200 is identical to a previously inserted SIM card. The SIM information list may be stored in the virtual SIM storage area.

The SIM card interface 170 provides a communication passage or interaction between a SIM card 200 and the mobile device 100. The SIM card interface 170 detects a signal corresponding to the insertion or removal of a SIM card 200 and outputs it to the controller 160. The SIM card interface 170 periodically outputs a signal under the control of the controller 160 to detect a connection state of the SIM card 200. Alternatively, the SIM card interface 170 can detect whether the SIM card 200 is inserted or removed into or from the SIM card interface 170 by detecting a change in voltage with respect to a reference voltage. Although exemplary embodiments of the present invention are implemented in such a way that the SIM card interface 170 is constructed to receive SIM 1 card 201 or SIM 2 card 203 as shown in FIG. 2, it should be understood that the present invention is not limited thereto. For example, the SIM card interface 170 can be implemented to receive two or more SIM cards alternatively or simultaneously.

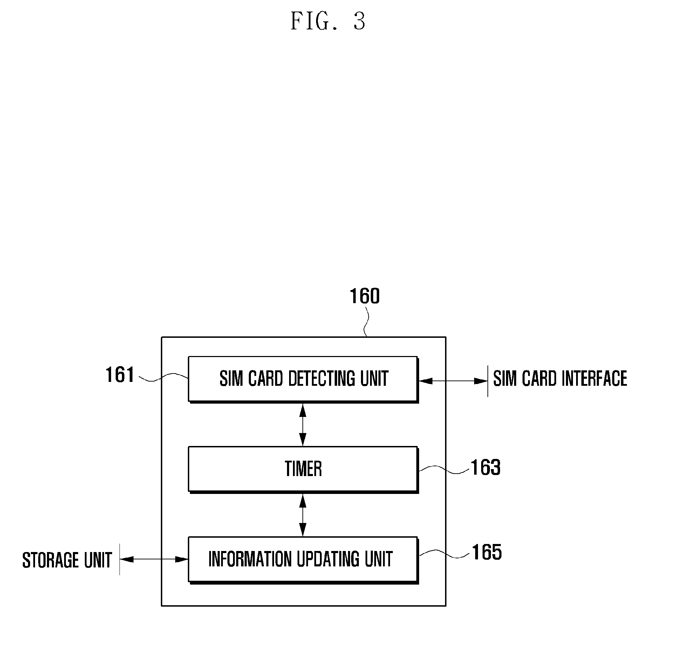

FIG. 3 illustrates a controller of a mobile device according to an exemplary embodiment of the present invention.

Referring to FIG. 3, the controller 160 controls electric power supplied to the elements in the mobile device 100 and the flow of signals thereamong. The controller 160 can support a variety of functions and a SIM card simple application function in particular. To this end, the controller 160 includes a SIM card detecting unit 161, a timer 163, and an information updating unit 165.

The SIM card detecting unit 161 determines whether a SIM card 200 is inserted into the SIM card interface 170. The SIM card detecting unit 161 can periodically output a particular signal to the inserted SIM card via the SIM card interface 170. If the SIM card detecting unit 161 receives a reply signal in response to the particular signal or a specific signal via the SIM card interface 170, it ascertains that a SIM card has been inserted. Otherwise, it concludes that no SIM card has been inserted. The SIM card detecting unit 161 can detect the insertion or removal of a SIM card 200 by detecting the change in the voltage, set to the SIM card interface 170, with respect to a reference voltage. In that case, the SIM card detecting unit 161 can determine whether a 'No SIM card mode' is operated that indicates a state where a SIM card is not inserted into the SIM card interface 170 and can accordingly output a message corresponding to the determination.

If SIM 1 card 201, inserted into the SIM card interface 170 of the mobile device 100 before the mobile device 100 has been booted up, is removed from the SIM card interface 170 after the mobile device 100 has been booted up, under the control of the controller 160, the timer 163 operates for a certain period of time. If the removed SIM 1 card 201 is re-inserted into or a new SIM 2 card 203 is inserted into the SIM card interface 170 within the period of time, the timer 163 performs an initialization process.

The information updating unit 165 sets information for operating the RF communication unit 110 and updates information stored in the storage unit 150, according to whether the SIM card, detected by the SIM detecting unit 161, is inserted or removed and whether the timer 163 has determined that the set period of time has expired. For the sake of convenience, it is assumed that SIM 1 card 201 has been inserted into the SIM card interface 170 before the mobile device 100 has been first booted up. In that case, if the SIM 1 card 201 is removed from the SIM card interface 170, the information updating unit 165 operates the timer 163. If the SIM card 200 is re-inserted into the SIM card interface 170 before the timer 163 has determined that the period of time has expired, the information updating unit 165 detects the insertion of the SIM card 200 via the SIM card detecting unit 161 and transmits and receives data to and from the inserted SIM card 200. The information updating unit 165 determines whether data, output from the SIM card 200, for example, IMSI information for identifying a type of the SIM card 200, is identical to the first IMSI information of the inserted SIM 1 card 201. If data is identical to the first IMSI information of the inserted SIM 1 card 201, the information updating unit 165 concludes that the SIM card 200 is the same as the previously inserted SIM 1 card 201.

On the contrary, if the information updating unit 165 receives IMSI information, different from the type of the first IMSI, from the SIM card 200, it can conclude that the inserted SIM card 200 is a new SIM card that differs from the previously inserted SIM 1 card 201. More particularly, if there is a SIM storage area, the information updating unit 165 updates base station-related information, stored in the virtual SIM storage area, and mobile communication service-related information.

If SIM 1 card having the same IMSI as the previously inserted SIM 1 card 201 is inserted into the SIM card interface 170 before the timer 163 has expired, the information updating unit 165 does not update base station-related information and mobile communication service-related information but maintains the setting of the RF communication unit 110 as it was previously set. That is, the information updating unit 165 can perform a control operation so that cell selection information and PLMN selection information, i.e., information for supporting a mobile communication service based on SIM 1 card 201, can be maintained. The information updating unit 165 can also perform a control operation so that call log information, phone book information, and text information can be stored.

The controller 160 can drive a number of timers to determine the timing of updating base station-related information and mobile communication service-related information. The controller 160 can drive the first and second timers where the first timer has a first time period and the second timer has a second time period greater than the first time period. If SIM 1 card 201, the same as the SIM 1 card 201 inserted before the first time period has elapsed, is inserted into the SIM card interface 170, the information updating unit 165 may not update both the base station-related information and the mobile communication service-related information. If SIM 1 card 201, the same as the SIM 1 card 201 inserted after the first time period has elapsed but before the second time period has elapsed, is inserted into the SIM card interface 170, the information updating unit 165 performs a protocol procedure so that the base station-related information is updated but the mobile communication service-related information is not updated. If SIM 1 card 201 is re-inserted into the SIM card interface 170 after the second time period has elapsed, the information updating unit 165 can update both the base station-related information and the mobile communication service-related information.

If SIM 2 card 203, different from SIM 1 card 201 that was inserted irrespective of before or after the timer 163 has expired, is inserted into the SIM card interface 170, the information updating unit 165 can perform the processes of selecting PLMN information and a cell based on the inserted SIM 2 card 203, can receive the base station-related information, i.e., PLMN selecting information and/or the cell selecting information, and can maintain the mobile device 100 in a camping on state. The information updating unit 165 updates base station-related information, newly received by removing information stored in the storage unit 150, and mobile communication service-related information containing at least one of the phone book information stored in the SIM 2 card 203, call log information, and text transmission/reception information. If two timers are operated and a SIM card, different from the previously inserted SIM card, is inserted into the SIM card interface 170, the information updating unit 165 can update the base station-related information and the mobile communication service-related information, irrespective of the operation of the timer.

If the mobile device 100 does not support a virtual SIM storage area and a direct reading/writing operation of a SIM card, the information updating unit 165 performs only a protocol procedure for camping on a base station based on the currently inserted SIM card and collects and updates base station-related information. In this case, the information updating unit 165 may not update mobile communication service-related information.

As described above, when the mobile device for simply operating a SIM card has been booted up and then the inserted SIM card is removed from the SIM card interface of the mobile device or a new SIM card is inserted thereto, the mobile device can only update at least one of the base station-related information and the mobile communication service-related information, according to the type and the insertion time point of the SIM card, thereby not requiring an additional bootstrapping process. The base station-related information may include PLMN selection information, cell selection information, location registration information, etc. The mobile communication service-related information may include call log information, phone book information, text transmission/reception information, etc.

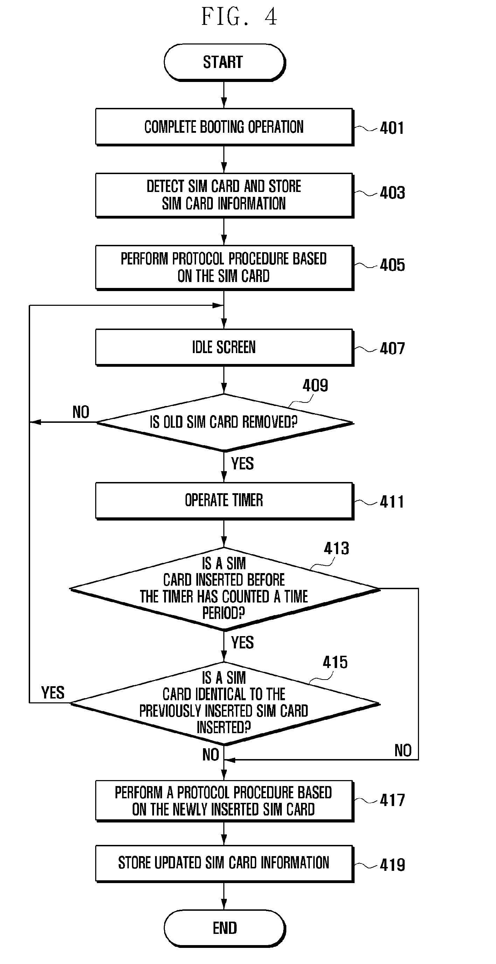

In the foregoing description, the configuration and function of the mobile device for simply operating a SIM card has been explained. The following description explains an exemplary operation method of a mobile device with reference to FIG. 4.

FIG. 4 is a flowchart of a mobile device operation according to an exemplary embodiment of the present invention. In the following description of FIG. 4, it is assumed that one of a number of SIM cards has been inserted into the mobile device before the mobile device has been booted up.

Referring to FIGs. 1 to 4, when the mobile device 100 is turned on, the controller 160 initializes the elements in the mobile device 100, thereby performing a bootstrapping process in step 401.

The mobile device 100 detects an inserted SIM card and performs a control operation so that information stored in the SIM card can be stored in the storage unit 150 in step 403. That is, the mobile device 100 creates a virtual SIM storage area and stores information related to the inserted SIM card, for example, IMSI information, phone book information, etc., in the virtual SIM storage area.

The mobile device 100 performs a protocol procedure based on the inserted SIM card in step 405. The mobile device 100 may perform PLMN selection, cell selection, location registration, etc., based on a base station supporting the inserted SIM card. The mobile device 100 can store base station-related information, acquired during the process of performing the SIM protocol procedure, in the virtual SIM storage area. The base station-related information includes PLMN selection information, cell selection information, location registration information, etc.

The mobile device 100 displays an idle screen on the display unit 140 in step 407. In an exemplary implementation, the mobile device 100 can display an idle screen when it has booted up at step 401, irrespective of whether processes related to the inserted SIM are performed. Therefore, steps 403 and 405 may be performed according to a background processing job while the idle screen is being displayed on the display unit 140.

The mobile device 100 determines whether the inserted SIM card is removed from the SIM card interface 170 in step 409. If the mobile device 100 determines in step 409 that the inserted SIM card has not been removed, it returns to step 407 where it displays an idle screen and supports corresponding functions according to a user's request or operation. On the contrary, if the mobile device 100 determines in step 409 that the inserted SIM card has been removed, it operates the timer 163 in step 411. In an exemplary implementation, the mobile device 100 can operate a number of timers that may have different time periods, respectively.

The mobile device 100 determines whether a SIM card is inserted into the SIM card interface 170 before a time period of the timer 163 has elapsed in step 413. If the mobile device 100 determines in step 413 that a SIM card is inserted into the SIM card interface 170 before a time period of the timer 163 has elapsed, it further determines whether the newly inserted SIM card is identical to the removed SIM card in step 415.

If the mobile device 100 determines in step 415 that the newly inserted SIM card is identical to the removed SIM card, it returns to step 407 and proceeds with the following processes thereof. That is, the mobile device 100 does not perform an information updating process, but instead maintains information related to the SIM card, inserted before step 407. For example, the mobile device 100 maintains information such as base station-related information and mobile communication service-related information, and provides a mobile communication service based on the maintained information. In an exemplary implementation, in order to determine whether the newly inserted SIM card is identical to the removed SIM card at step 415, the mobile device 100 can compare IMSI information of the newly inserted SIM card with that of the previously inserted SIM card.

On the other hand, if the mobile device 100 determines in step 413 that a SIM card is inserted into the SIM card interface 170 after a time period of the timer 163 has elapsed, or determines in step 415 that the newly inserted SIM card differs from the removed SIM card although a time period of the timer 163 has not elapsed, it performs a protocol procedure based on the newly inserted SIM card in step 417. The mobile device 100 stores updated SIM card-related information, created when the SIM protocol procedure is performed, in a virtual SIM storage area in step 419. The mobile device 100 can support a mobile communication service by performing a base station searching process, an access process, a location registration process, etc., based on the newly inserted SIM card. The mobile device 100 collects IMSI information about newly inserted SIM cards and stores the information in the storage unit 150. The mobile device 100 also updates base station-related information, acquired based on the newly inserted SIM card, in the virtual SIM storage area. The base station-related information may include PLMN selection information and cell selection information. In addition, the mobile device 100 removes the mobile communication service-related information, stored based on the previously inserted SIM card, and updates mobile communication service-related information, stored in the newly inserted SIM card, in the virtual SIM storage area. The mobile communication service-related information may include call log information, phone book information, text transmission/reception information, etc. To this end, the mobile device 100 can operate a number of timers at step 411. In that case, the mobile device 100 can maintain or update mobile communication service-related information in the virtual SIM storage area according to a SIM card that is newly inserted in a particular timing interval. This will be explained, in more detail, assuming that SIM 1 card 201 has been inserted into the SIM card interface 170. The mobile device 100 operates first and second timers, where their counting time periods differ from each other, when SIM 1 card 201 is removed. If SIM 1 card 201 is re-inserted into the mobile device 100 before a time period of the fist timer has elapsed, the mobile device 100 does not perform an additional information updating process. If SIM 1 card 201 is inserted after the time period of the first timer has elapsed but before a time period of the second timer has elapsed, the mobile device 100 performs a SIM protocol procedure and updates only base station-related information. If SIM 1 card 201 is inserted after the time period of the second timer has elapsed, the mobile device 100 updates base station-related information and mobile communication service-related information. If SIM 2 card 203, different from the SIM 1 card 201, is inserted into the mobile device 100 irrespective of the operation of the timer, the mobile device 100 performs a SIM protocol procedure and updates base station-related information and also mobile communication service-related information stored in the SIM 2 card 203. Since the mobile device 100 performs the SIM protocol procedure according to the replacement of SIM card and only updates the base station-related information and mobile communication service-related information, it can support a mobile communication service without having to perform an additional bootstrapping process. In an exemplary embodiment, the mobile device 100 can control the display unit 140 to continue displaying an idle screen.

If the mobile device 100 does not support an option for setting a virtual SIM storage area, it can store mobile communication service-related information in an area of the storage unit 150. In addition, the mobile device 100 does not perform an additional updating process, by maintaining the mobile communication service-related information as it is in a previous state, irrespective of removal or insertion of a previously inserted SIM card.

In summary, according to exemplary embodiments of the present invention, if a previously inserted SIM card is removed from the mobile device, a determination is made whether a SIM card, identical to or different from the removed SIM card, is inserted and a control is made to update base station-related information and mobile communication service-related information according to the insertion time point of a SIM card. For example, if a SIM card identical to the removed SIM card is inserted before a time period of a timer has elapsed, the mobile device does not update base station-related information and mobile communication service-related information but maintains it as it is from a previous state. On the contrary, if a SIM card identical to the removed SIM card is inserted after a time period of a timer has elapsed, the mobile device updates base station-related information and mobile communication service-related information. Meanwhile, the mobile device may operate two timers of which time periods differ from each other. If a SIM card identical to the removed SIM card is inserted after a time period of a first timer has elapsed, the mobile device does not update base station-related information and mobile communication service-related information. If a SIM card identical to the removed SIM card is inserted after a time period of a first timer has elapsed but before a time period of a second timer has elapsed, the mobile device updates only base station-related information. If a SIM card identical to the removed SIM card is inserted after a time period of a second timer has elapsed, the mobile device updates base station-related information and mobile communication service-related information. On the contrary, if a SIM card of a different type from that of the removed SIM card is inserted into the mobile device, the mobile device can update base station-related information and mobile communication service-related information irrespective of whether a time period of a timer has elapsed.

As described above, the operation method and the mobile device adapted to the method, according to exemplary embodiments of the present invention, can simplify the operation procedure of the mobile device and reduce consumption of the battery power.

While the invention has been shown and described with reference to certain exemplary embodiments thereof, it will be understood by those skilled in the art that various changes in form and details may be made therein without departing from the spirit and scope of the invention as defined in the appended claims and their equivalents.

## Claims

1. An operation method of a mobile device, the method comprising **characterized in that**:
removing a Subscriber Identity Module (SIM) card, previously inserted into the mobile device, from the mobile device;
determining whether a SIM card, identical to or different from the removed SIM card, is inserted into the mobile device; and
managing base station-related information,
wherein the managing of the base station-related information comprises:
updating the base station-related information with base station-related information newly acquired by performing a base station-related protocol procedure based on a newly inserted SIM card, according to at least one of the type and the insertion time point of the newly inserted SIM card; or
maintaining base station-related information stored based on the removed SIM card.

2. The method of claim 1, wherein the managing of the base station-related information further comprises:
updating, if a new SIM card, different from the removed SIM card, is inserted, base station-related information, stored based on the previously inserted SIM card, with base station-related information acquired via a protocol procedure performed based on the inserted new SIM card,
wherein the base station-related information includes at least one of Public Land Mobile Network (PLMN) selection information and cell selection information.

3. The method of claim 2, wherein the managing of the base station-related information further comprises:
updating mobile communication service-related information including at least one of call log information, phone book information, and text transmission/reception information, stored based on the previously inserted SIM card, with mobile communication service-related information based on the inserted new SIM card different from the previously inserted SIM card.

4. The method of claim 1, wherein the managing of the base station-related information further comprises:
maintaining, if a SIM card, identical to the removed SIM card, is re-inserted, base station-related information stored based on the previously inserted SIM card.

5. The method of claim 1, further comprising:
operating a timer when the previously inserted SIM card is removed.

6. The method of claim 5, wherein the managing of the base station-related information further comprises:
maintaining, if a SIM card, identical to the previously inserted SIM card, is re-inserted before a counting time period of the timer has elapsed, base station-related information stored based on the removed SIM card, and mobile communication service-related information including at least one of call log information, phone book information, and text transmission/reception information, stored based on the previously inserted SIM card.

7. The method of claim 5, wherein the managing of the base station-related information further comprises:
updating, if a SIM card, identical to or different from the previously inserted SIM card, is inserted into the mobile device after a counting time period of the timer has elapsed, base station-related information, stored based on the previously inserted SIM card, with base station-related information newly acquired by performing a base station-related protocol procedure based on the newly inserted SIM card.

8. The method of claim 1, further comprising:
operating a first timer having a first counting time period; and
operating a second timer having a second counting time period longer than the first counting time period.

9. The method of claim 8, wherein the managing of the base station-related information further comprises:
maintaining, if a SIM card, identical to the previously inserted SIM card, is re-inserted before a first counting time period of the first timer has elapsed, base station-related information, stored based on the previously inserted SIM card, and mobile communication service-related information including at least one of call log information, phone book information, and text transmission/reception information, stored based on the previously inserted SIM card;
updating, if a SIM card, identical to the previously inserted SIM card, is inserted into the mobile device after the first counting time period of the first timer has elapsed but before the second counting time period of the second timer has elapsed, stored base station-related information with base station-related information newly acquired by performing a base station-related protocol procedure based on the previously inserted SIM card, and maintaining mobile communication service-related information including at least one of call log information, phone book information, and text transmission/reception information, stored based on the previously inserted SIM card; and
updating, if a SIM card, identical to or different from the previously inserted SIM card, is inserted into the mobile device after the second counting time period of the second timer has elapsed, stored base station-related information with base station-related information newly acquired by performing a base station-related protocol procedure based on the previously inserted SIM card or a new SIM card different from the previously inserted SIM card, and mobile communication service-related information including at least one of call log information, phone book information, and text transmission/reception information, stored based on the previously inserted SIM card, with mobile communication service-related information, stored based on the previously inserted SIM card or a new SIM card different from the previously inserted SIM card.

10. A mobile device comprising **characterized in that**:
a Subscriber Identity Module (SIM) card interface for receiving at least one of a plurality of SIM cards; and
a controller for updating base station-related information with base station-related information newly acquired by performing a base station-related protocol procedure based on a SIM card, newly inserted into the SIM card interface, according to the type and the insertion time point of the newly inserted SIM card or for maintaining base station-related information stored based on a removed SIM card before insertion of the SIM card.

11. The mobile device of claim 10, further comprising:
a display unit for displaying at least one of a message, and one of an icon and an image indicating the type of the previously inserted SIM card or a new SIM card if the previously inserted SIM card is removed and a certain period of time has elapsed.

12. The mobile device of claim 10, wherein the controller comprises:
a SIM card detecting unit for detecting a type of the previously inserted SIM card or a new SIM card;
a timer for counting a time period when the previously inserted SIM card is removed; and
an information updating unit for determining whether to update base station-related information, stored based on the previously inserted SIM card, according to the type of newly inserted SIM card before or after the counting time period of the timer has elapsed.

13. The mobile device of claim 12, wherein the information updating unit maintains, if a SIM card, identical to the previously inserted SIM card, is re-inserted before the counting time period of the timer has elapsed, base station-related information stored based on the removed SIM card, and mobile communication service-related information including at least one of call log information, phone book information, and text transmission/reception information, stored based on the previously inserted SIM card; and
updates, if a SIM card, identical to or different from the previously inserted SIM card, is inserted after a counting time period of the timer has elapsed, base station-related information, stored based on the previously inserted SIM card, with base station-related information newly acquired by performing a base station-related protocol procedure based on the newly inserted SIM card.

14. The mobile device of claim 10, further comprising:
a SIM card detecting unit for detecting a type of the previously inserted SIM card or a new SIM card;
first and second timers for counting their time periods when the previously inserted SIM card is removed; and
an information updating unit for determining whether to update base station-related information, stored based on the previously inserted SIM card, according to the type of newly inserted SIM card and one of insertion time points,
wherein the insertion time points include a time point before a counting time period of the first timer has elapsed, a time point after the counting time period of the first timer has elapsed but before a counting time period of the second timer has elapsed, and a time point after the counting time period of the second timer has elapsed.

15. The mobile device of claim 14, wherein the information updating unit maintains, if a SIM card, identical to the previously inserted SIM card, is re-inserted before a counting time period of the first timer has elapsed, base station-related information, stored based on the previously inserted SIM card, and mobile communication service-related information including at least one of call log information, phone book information, and text transmission/reception information, stored based on the previously inserted SIM card,
updates, if a SIM card, identical to the previously inserted SIM card, is inserted into the mobile device after the counting time period of the first timer has elapsed but before the counting time period of the second timer has elapsed, stored base station-related information with base station-related information newly acquired by performing a base station-related protocol procedure based on the previously inserted SIM card, and maintains mobile communication service-related information including at least one of call log information, phone book information, and text transmission/reception information, stored based on the previously inserted SIM card; and
updates, if a SIM card, identical or different from the previously inserted SIM card, is inserted into the mobile device after the counting time period of the second timer has elapsed, stored base station-related information with base station-related information newly acquired by performing a base station-related protocol procedure based on the previously inserted SIM card or a new SIM card different from the previously inserted SIM card, and updates mobile communication service-related information including at least one of call log information, phone book information, and text transmission/reception information, stored based on the previously inserted SIM card, with mobile communication service-related information, stored based on the previously inserted SIM card or a new SIM card different from the previously inserted SIM card.
